# EUROPÄISCHE PATENTSCHRIFT

(11) **EP 1 211 397 B1**
(45) Veröffentlichungstag und Bekanntmachung des Hinweises auf die Patenterteilung: **21.04.2004**
(21) Anmeldenummer: 01125982.7
(22) Anmeldetag: 31.10.2001
(51) Int. Cl.: F01N 3/08, F01N 7/14

(54) **Anordnung zur Behandlung der aus einem Ottomotor mit Direkteinspritzung tretenden Abgase**
Apparatus for treating the exhaust gas of a direct-injection gasoline engine
Dispositif pour le traitement des gaz d'échappement d'un moteur à allumage commandé et injection directe

(30) Priorität: 29.11.2000 DE 10059195
(43) Veröffentlichungstag der Anmeldung: 05.06.2002
(73) Patentinhaber: Benteler Automobiltechnik GmbH, 33104 Paderborn (DE)
(72) Erfinder: Smatloch, Christian, Dr., 33100 Paderborn (DE); Gross, Walter, 32456 Detmold (DE)
(74) Vertreter: Bockermann, Rolf, Dipl.-Ing.

(56) Entgegenhaltungen:
- EP-A- 0 633 420
- EP-A- 0 789 137
- EP-A- 0 837 230
- WO-A-00/43104
- US-A- 5 562 154
- US-A- 5 979 159
- US-B1- 6 203 764

## Beschreibung

Die Erfindung betrifft eine Anordnung zur Behandlung der aus einem Ottomotor mit Direkteinspritzung tretenden Abgase.

Die modernen Ottomotoren mit Direkteinspritzung sind zur Erzielung eines möglichst niedrigen Kraftstoffverbrauchs durch Magerbetrieb oder unterstöchiometrische Betriebspunkte gekennzeichnet. Aufgrund dieses Sachverhalts können die derzeit eingesetzten Katalysatoren, insbesondere Drei-Wege-Katalysatoren, die Schadstoffkomponenten Kohlenwasserstoffe (HC), Kohlenmonoxid (CO) und Stickoxid (NOₓ) nur unvollständig in ungiftige Verbindungen wie Kohlendioxid (CO₂), Stickstoff (N₂) bzw. Wasser (H₂O) konvertieren. Ursache der nicht vollständigen Konvertierung der Schadstoffkomponenten sind die geringen Abgastemperaturen und die höheren HC-Emissionen im Magerbetrieb der Ottomotoren, vor allem aber die Notwendigkeit zur NOₓ-Reduktion im sauerstoffreichen Abgas.

Aus Gründen des Umweltschutzes wird mithin eine spezielle Abgasbehandlung angestrebt mit NOₓ-Wirkungsgraden von über 90 % in einem Temperaturbereich zwischen 300°C und 500 °C. Zu diesem Zweck werden in die sich an die Ottomotoren anschließenden Abgasstränge in der Regel motornahe Drei-Wege-Katalysatoren und unter den Böden der Kraftfahrzeuge angeordnete NOₓ-Adsorber vorgesehen. Solche Anordnungen sind jedoch mit zwei gegensätzlichen Anforderungen verbunden. Einerseits sollen die Drei-Wege-Katalysatoren in möglichst kurzer Zeit auf eine Arbeitstemperatur von > 350 °C gebracht werden, wohingegen andererseits im Hinblick auf die maximale Temperaturfestigkeit der NOₓ-Absorber die Abgastemperatur 500°C nicht überschreiten soll.

Was in diesem Zusammenhang eine möglichst kurze Aufheizzeit für die Katalysatoren anlangt, so ist diese noch verhältnismäßig leicht dadurch zu erfüllen, dass sogenannte luftspaltisolierte Abgasführungselemente, wie Abgaskrümmer oder Vorrohre, zum Einsatz gelangen. Solche Elemente sind zweiwandig ausgeführt und weisen dünnwandige Innenelemente (Abgasrohre) mit geringer Wärmespeicherkapazität auf, was zu einer geringen Entnahme von Wärme aus dem Abgas und somit zu einer schnellen Aufheizung der Katalysatoren führt, und aus Außenelementen (Mantelrohren), mit welchen die Dichtigkeit herbeigeführt wird und welche auch eine tragende Funktion ausüben.

Der zweiten Anforderung konnte bislang noch nicht zufriedenstellend Rechnung getragen werden. Grund sind die insbesondere im Hochlast- bzw. Hochgeschwindigkeitsbereich auftretenden und erheblich höher als 500 °C liegenden Temperaturen. Folglich behilft sich die Fachwelt bislang mit relativ langen Abgassträngen, die dadurch ein Abkühlen der Abgase auf dem Wege zu den NOₓ-Adsorbern bewirken. Auch die Lebensdauer der momentan eingesetzten NOₓ-Adsorber ist aufgrund der nach wie vor sehr hohen Temperaturbelastungen unzureichend. Ferner ist es bekannt, bei der Zugabe des Kraftstoffs zu kühlen. Eine solche innermotorische Maßnahme verschlechtert jedoch erheblich den Gesamtwirkungsgrad.

Im Umfang der DE 693 09 453 T2 ist ganz allgemein eine unter reversiblem Vakuum stehende thermische isolierende Ummantelung vorgeschlagen worden. Lediglich beispielsweise wird angegeben, dass diese Ummantelung bei Katalysatorschalldämpfern von Kraftfahrzeugen und Lastwagen einsetzbar ist. Ferner wird zum Ausdruck gebracht, dass ein Metallpulver in diese Ummantelung eingebracht werden kann, um Wasserstoff freizusetzen. Eine nähere Gestaltung der Ummantelung in der Anwendung für einen Ottomotor mit Direkteinspritzung ist diesem Dokument nicht zu entnehmen.

Des Weiteren zählt durch die DE 196 04 367 A1 eine Abgasleitung mit einem in einem Außenrohr unter Ausbildung eines ringförmigen Luftspalts relativ verlagerbaren Innenrohr zum Stand der Technik, bei welchem dem Außenrohr ein Dehnungsausgleicher zugeordnet ist, der durch hydraulische balgartige Umformung der Wandung des Außenrohrs gebildet ist.

Durch die US-PS 5,979,159 ist eine Anordnung zur Behandlung der aus einem Verbrennungsmotor tretenden Abgase bekannt, welche einen motornahen Katalysator und einen zum Katalysator durch mehrere Abgasrohre distanzierten NOₓ-Absorber aufweist. Eines der Abgasrohre ist mit einer umfangsseitigen thermischen Isolation versehen. Die anderen Abgasrohre besitzen keine thermische Isolation. Sie sind innenseitig mit eine laminare Strömung gewährleistenden Elementen ausgerüstet.

Die WO 00/43104 befasst sich mit der Ausbildung eines Katalysators für ein Kraftfahrzeug. Dieser Katalysator besitzt an seinen beiden Stirnseiten Flansche, die über kurze Metallfaltenbälge mit konischen Endabschnitten eines inneren Gehäuses verbunden sind, in dem sich katalytische Substrate befinden. Die konischen Endabschnitte des inneren Gehäuses sind über gegengleich gestaltete konische Hülsen mit konischen Endabschnitten eines äußeren Gehäuses verbunden. Der Bereich zwischen den konischen Hülsen, dem inneren Gehäuse und dem äußeren Gehäuse ist mit einem Vakuum versehen. Des Weiteren ist ein Zwischengehäuse in diesen Bereich eingegliedert.

Der Erfindung liegt - ausgehend vom Stand der Technik - die Aufgabe zugrunde, eine Anordnung zur Behandlung der aus einem Ottomotor mit Direkteinspritzung tretenden Abgase zu schaffen, mit welcher den gegensätzlichen Anforderungen beim Einsatz eines geregelten Katalysators mit nachgeschaltetem NOₓ-Adsorber in einem Abgasstrang in einem befriedigenden Umfang entgegen gekommen werden kann.

Diese Aufgabe wird mit den im Patentanspruch angegebenen Merkmalen gelöst.

Hierbei wird zunächst dafür Sorge getragen, dass im Spalt zwischen dem Abgasrohr und dem Mantelrohr eine Wärme isolierende Atmosphäre hergestellt wird. Diese wird durch Evakuieren des Spalts oder durch Ziehen von Vakuum gebildet. Mit dieser Atmosphäre wird erreicht, dass durch ihre Isolationswirkung der Katalysator mangels Wärmetransport durch Konvektion schnellstmöglich aufgeheizt wird und aufgrund dessen nur geringe Mengen an schädlichen Emissionen erzeugt werden. Da eine solche Atmosphäre nur einmal eingestellt werden muss, bleibt sie für die gesamte Lebensdauer der Anordnung erhalten.

Kombinativ zu der Wärme isolierenden Atmosphäre wird in dem Spalt ein spezielles Metallpulver angeordnet, welches oberhalb einer Temperatur von etwa 450 °C bis 500 °C Wasserstoffgas freisetzt. Dadurch wird die Isolationswirkung der Atmosphäre aufgehoben, so dass das zum Wärmetransport vorzüglich geeignete Wasserstoffgas die Wärme vom Abgasrohr zum Mantelrohr transferiert, welche von dort an die Umgebungsluft abgeführt wird. Mithin wird gezielt erreicht, dass der NOₓ-Adsorber mit keiner höheren Temperatur als ca. 500 °C beaufschlagt und damit seine Temperaturfestigkeit nicht beeinträchtigt wird.

Mit Hilfe der Erfindung kann folglich ein schnelles Aufheizen des Katalysators und ein Wärmetransport bei erhöhten Temperaturen erreicht werden. Der Einsatz eines Wasserstoffgas freisetzenden bzw. adsorbierenden Metallpulvers erlaubt die Regelung/Einstellung der Atmosphäre im Spalt bei bestimmten Temperaturen. Hierbei wird die Zusammensetzung des Metallpulvers von der jeweils erforderlichen "Schalttemperatur" eingestellt. Eine vorteilhafte Legierung des Metallpulvers umfasst unter anderem Zirkonium, Vanadium und Eisen. Die einzusetzende Menge richtet sich nach den jeweiligen Gegebenheiten des Ottomotors, des im Kraftfahrzeug zur Verfügung stehenden Einbauraums und dem Aufbau des Abgasstrangs.

Da das Mantelrohr im Verhältnis zum inneren Abgasrohr meistens andere Temperaturen aufweist, wird ein Längenabschnitt des Mantelrohrs axial flexibel ausgebildet. Dieser bevorzugt in der Nähe des Katalysators angeordnete, als Metallfaltenbalg ausgebildete Längenabschnitt minimiert dann die auftretenden mechanischen Spannungen.

Insgesamt kann unter Anwendung der Erfindung ein effizienteres Antriebssystem mit einem reduzierten Kraftstoffverbrauch bei geringeren Emissionen bereitgestellt werden. Insbesondere die Lebensdauer des NOₓ-Adsorbers wird deutlich verlängert. Durch die Funktionstrennung Katalysator und NOₓ-Adsorber können zudem spezifische Werkstoffe eingesetzt und damit auch für das Abgasrohr sowie das Mantelrohr zwischen Katalysator und NOₓ-Adsorber höhere Lebenserwartungen bei Gewichtsreduzierung erzielt werden.

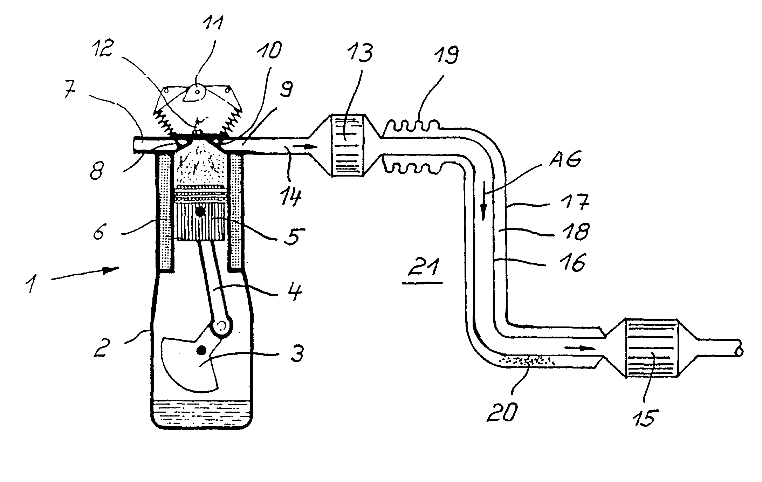

Die Erfindung ist nachfolgend anhand eines in der Zeichnung schematisch veranschaulichten Ausführungsbeispiels näher erläutert.

Mit 1 ist in der Figur ein Ottomotor mit Direkteinspritzung bezeichnet. Dieser Ottomotor 1 umfasst generell ein Gehäuse 2, eine Kurbelwelle 3, eine Pleuelstange 4, einen Kolben 5, eine Wasserkühlung 6, einen Einlass 7 mit einem Einlassventil 8, einen Auspuff 9 mit einem Auslassventil 10, wobei die Ventile 8, 10 in die Abhängigkeit einer Nockenwelle 11 gestellt sind, und eine Zündkerze 12.

Mit dem Auspuff 9 ist eine zu einem motornahen geregelten Katalysator 13 (Drei-Wege-Katalysator) führende Abgasleitung 14 verbunden.

Zwischen dem Katalysator 13 und einem unter dem Boden eines nicht näher dargestellten Kraftfahrzeugs angeordneten NOₓ-Adsorber 15 erstreckt sich ein Abgasrohr 16. Das Abgasrohr 16 ist im Abstand von einem Mantelrohr 17 umgeben, so dass ein umfangsseitiger Spalt 18 gebildet wird. Ein dem Katalysator 13 benachbarter, axial flexibler Längenabschnitt 19 des Mantelrohrs 17 ist als Metallfaltenbalg ausgebildet.

Der Spalt 18 zwischen dem Abgasrohr 16 und dem Mantelrohr 17 ist evakuiert. Ferner befindet sich in dem Spalt 18 ein Metallpulver 20, welches aus einer Legierung besteht, die unter anderem Zirkonium, Vanadium und Eisen enthält.

Da der evakuierte Spalt 18 keinen Wärmetransport durch Konvektion erlaubt, wird die Temperatur des Abgases AG genutzt, um die Aufheizzeit für den Katalysator 13 zur Erreichung der Arbeitstemperatur > 350 °C zu reduzieren.

Das im Spalt 18 befindliche Metallpulver 20 hebt ab einer Temperatur von ca. 450 °C bis 500 °C die Isolationswirkung des Vakuums auf, da dann aus dem Metallpulver 20 Wasserstoffgas freigesetzt wird und dieses Wasserstoffgas durch Konvektion Wärme aus dem Abgas AG des Ottomotors 1 vom inneren Abgasrohr 16 zum äußeren Mantelrohr 17 überführt, welche von dort an die Umgebung 21 abgeführt wird. Dadurch wird der NOₓ-Adsorber 15 mit einer unterhalb 500 °C liegenden Temperatur beaufschlagt und seine Standzeit erhöht.

Beim Unterschreiten der sogenannten Übergangstemperatur wird das Wasserstoffgas vom Metallpulver 20 adsorbiert und auf diese Weise das Vakuum im Spalt 18 wieder hergestellt.

### Bezugszeichenaufstellung

- 1 -: Ottomotor
- 2 -: Gehäuse v. 1
- 3 -: Kurbelwelle
- 4 -: Pleuelstange
- 5 -: Kolben
- 6 -: Wasserkühlung
- 7 -: Einlass
- 8 -: Einlassventil
- 9 -: Auspuff
- 10 -: Auslassventil
- 11 -: Nockenwelle
- 12 -: Zündkerze
- 13 -: Katalysator
- 14 -: Abgasleitung
- 15 -: Adsorber
- 16 -: Abgasrohr
- 17 -: Mantelrohr
- 18 -: Spalt
- 19 -: flexibler Längenabschnitt
- 20 -: Metallpulver
- 21 -: Umgebung

- AG -: Abgas

## Patentansprüche

1. Anordnung zur Behandlung der aus einem Ottomotor (1) mit Direkteinspritzung tretenden Abgase (AG), welche einen motornahen Katalysator (13) und einen zum Katalysator (13) durch ein Abgasrohr (16) distanzierten NOₓ-Adsorber (15) aufweist, **dadurch gekennzeichnet, dass** das Abgasrohr (16) unter Bildung eines umfangsseitigen Spalts (18) in ein mit einem flexiblen Längenabschnitt (19) in Form eines Metallfaltenbalgs versehenes Mantelrohr (17) eingebettet ist und im Spalt (18) zwischen dem Abgasrohr (16) und dem Mantelrohr (17) ein in Abhängigkeit von der Temperatur im Spalt (18) Wasserstoffgas freisetzendes bzw. adsorbierendes Metallpulver (20) innerhalb einer Wärme isolierenden, durch Evakuieren des Spalts (18) gebildeten Atmosphäre angeordnet ist.

## Claims

1. An arrangement for treating the exhaust gases (AG) from a petrol engine (1) with direct injection, said arrangement comprising a catalyst (13) near the engine and a NOₓ adsorber (15) spaced from the catalyst (13) by an exhaust gas pipe (16), **characterised in that** the exhaust gas pipe (16) is embedded, with the formation of a peripheral gap (18), in a jacket tube (17) provided with a flexible section (19) of its length in the form of a corrugated metal bellows and there is disposed in the gap (18) between the exhaust gas pipe (16) and the jacket tube (17) a metal powder (20) inside a heat-insulating atmosphere formed by evacuation of the gap (18), said metal powder (20) liberating or adsorbing hydrogen gas in dependence on the temperature in the gap (18).

## Revendications

1. Dispositif pour le traitement des gaz d'échappement (AG) provenant d'un moteur à allumage commandé (1) à injection directe qui présente un catalyseur (13) proche du moteur et un adsorbeur de NOₓ (15) relié par un tuyau de gaz d'échappement (16), **caractérisé en ce que** le tuyau de gaz d'échappement (16) en formant un espace périphérique (18) est encastré dans une enveloppe tubulaire (17) munie d'un tronçon longitudinal souple (19) sous la forme d'un soufflet métallique et dans l'espace (18) entre le tuyau de gaz d'échappement (16) et l'enveloppe tubulaire (17) est disposée une poudre métallique adsorbant ou libérant le gaz hydrogène en fonction de la température dans l'espace (18), à l'intérieur d'une atmosphère isolant la chaleur par mise sous vide de l'espace (18).
